# EUROPEAN PATENT SPECIFICATION

(11) **EP 2 570 301 B1**
(45) Date of publication and mention of the grant of the patent: **11.11.2015**
(21) Application number: 11181634.4
(22) Date of filing: 16.09.2011
(51) Int. Cl.: F15B 11/044, B60P 1/16

(54) **Hydraulic arrangement and method for lowering a tipping frame of a hooklift**
Hydraulikanordnung und Verfahren zum Herablassen des Kipprahmens eines Hakenlifts
Agencement hydraulique et procédé de réduction d'un cadre de culbuteur d'un levage à crochet

(43) Date of publication of application: 20.03.2013
(73) Proprietor: Cargotec Finland Oy, 21201 Raisio (FI)
(72) Inventor: Raisio, Reijo, 25500 Perniö (FI); Nyström, Mikko, 21130 Poikko (FI); Hyttinen, Hannu, 21200 Raisio (FI)
(74) Representative: Turun Patenttitoimisto Oy

(56) References cited:
- EP-A1- 1 889 977
- EP-A2- 2 264 250
- GB-A- 191 323 699
- US-A- 1 332 008
- US-A1- 2004 221 714
- US-A1- 2005 242 310
- US-A1- 2011 185 888
- US-B1- 6 418 715

## Description

### TECHNICAL FIELD OF THE INVENTION

The present invention relates to a method for lowering a tipping frame of a hooklift according to the preamble of the appended independent claim.

### BACKGROUND OF THE INVENTION

Demountable systems are widely used in a field of transportation for quickly and easily transport and position platforms. A demountable system comprises a hooklift which is capable of performing several work tasks, such as loading, unloading, tipping and lowering of the platform.

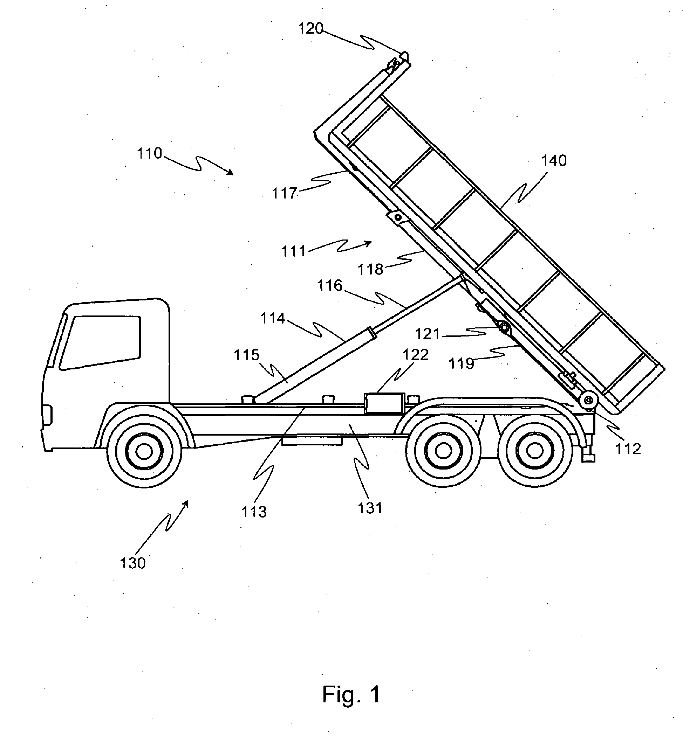

An example of a conventional hooklift assembled on a truck is illustrated schematically in fig. 1. The hooklift 110 comprises a tipping frame 111 which is connected through a tipping joint 112 to a subframe 113. The tipping frame 111 is arranged to be moved relative to the subframe 113 by main cylinders 114, the bottom sides 115 of the cylinders 114 being attached to the subframe 113 and the rods 116 of the cylinders 114 being attached to the tipping frame 111. The subframe 113 is attached to a chassis 131 of the truck 130.

The tipping frame 111 consists of a sliding frame 117, a middle frame 118 and a rear frame 119. The sliding frame 117 comprises a hook 120 with which the hooklift 110 has attached to a demountable platform 140. The sliding frame 117 is connected to the middle frame 118 in such a manner that part of the sliding frame 117 is arranged inside the middle frame 118, and that the sliding frame 117 can be slided relative to the middle frame 118. The middle frame 118 is connected to the rear frame 119 through a middle frame joint 121, and the rear frame 119 is connected to the subframe 113 through the tipping joint 112. The hooklift 110 also comprises locks (not shown in fig. 1) with which the relative movement of parts of the hooklift 110 can be prevented.

During loading and unloading of the platform 140, the middle frame 118 rotates around the middle frame joint 121, and the rear frame 119 is locked to the subframe 113. During tipping and lowering of the platform 140, the middle frame 118 and the rear frame 119 are locked together, and the rear frame 119 rotates around the tipping joint 112.

The hooklift 110 is operated by a hydraulic system 122 which controls the main cylinders 114. The hydraulic system 122 comprises a control valve and a load holding valve which are hydraulically connected to the main cylinders 114 which are double-acting differential cylinders. The control valve and the load holding valve are not shown in fig. 1.

The control valve is configured to coarse control the movement of the cylinders 114, i.e. to define whether cylinders 114 move or not and to which direction. Fine control of the cylinder movement is achieved with the load holding valve. With the load holding valve a constant cylinder speed, which is independent of size and direction of the cylinder load force, can be achieved.

With this hydraulic system, there is only one way to drive the main cylinders 114 inwards. Loading and lowering movements are both performed by driving the cylinders 114 inwards with a hydraulic pump (not shown in fig. 1) via the load holding valve. Because the hydraulic circuit design is based on optimising loading and unloading movements it does not suit well on the lowering movement because of the different behaviour of the cylinder load force. During loading and unloading movements, a variable size force acts on the main cylinders 114. Furthermore, the direction of the load force changes at a certain position of the movement from a pushing to pulling force and vice versa. Unlike in loading and unloading movements, in tipping and lowering movements there is a pushing load force acting on the main cylinders 114 during the whole work task.

A problem associated with the hydraulic system of fig. 1 and other known hydraulic systems for controlling the movement of main cylinders of a hooklift relates to the lowering movement. A problem is that a hydraulic pump must be used in lowering the tipping frame of the hooklift. This requires energy. Since the efficiency of the load holding valve is the better the bigger loads are acting on the cylinders, the efficiency of the load holding valve is not good when the platform is light. With known systems, energy consumption of a lowering process is practically the same as energy consumption of a loading process of a fully loaded platform.

Another problem of known hydraulic systems is that the lowering speed is low. Since a lowering process requires the use of a hydraulic pump for moving main cylinders inwards, the speed of the cylinders is limited by the flow rate of the hydraulic pump.

Document EP 1 889 977 provides a work machine where an electric-power generation means in a hydraulic actuator control circuit is made unnecessary by enabling a hybrid drive system to be directly driven by energy contained in a return fluid discharged from a hydraulic actuator.

### OBJECTIVES OF THE INVENTION

It is a main objective of the present invention to reduce or even eliminate prior art problems presented above.

It is an objective of the invention to provide a method for lowering a tipping frame of a hooklift which method requires very little energy.

In order to realise the above-mentioned objective, the method according to the invention is characterised by what is presented in the characterising part of the appended independent claim. Advantageous embodiments of the invention are described in the dependent claims.

### DESCRIPTION OF THE INVENTION

A typical hydraulic arrangement comprises a double-acting differential cylinder having a bottom side chamber and a rod side chamber, and a hydraulic circuit connecting the bottom side chamber to the rod side chamber. The typical hydraulic arrangement further comprises a flow control valve configured to allow a portion of hydraulic fluid to flow out of the hydraulic arrangement in order to enable the flow of hydraulic fluid from the bottom side chamber into the rod side chamber.

In the hydraulic arrangement, the bottom side chamber of the double-acting differential cylinder is connected in a regenerative manner to the rod side chamber of the cylinder. This means that hydraulic fluid of the bottom side chamber is arranged to fill up the rod side chamber when the cylinder moves inwards. This prevents the fluid of the rod side chamber from cavitating. The regenerative connection is implemented by the hydraulic circuit which is connected between the bottom side chamber and the rod side chamber of the cylinder. The hydraulic circuit may comprise one or more hydraulic components connected together with hydraulic pipes. The hydraulic circuit can even be a single hydraulic pipe connected between the bottom side chamber and the rod side chamber. Hydraulic fluid, such as oil, is intended to be flown in the hydraulic circuit. Preferably, the hydraulic circuit is configured to allow the fluid to flow through it only in one direction, that is to say, from the bottom side chamber to the rod side chamber. However, in some applications the hydraulic circuit may be configured to allow the fluid to flow in both directions, whereby the hydraulic circuit can also be used when the cylinder moves outwards.

An idea is to utilise the load force acting on the cylinder which load force pushes the cylinder inwards. Such a situation occurs, for example, in lowering of a tipping frame of a hooklift. Due to gravity, the tipping frame and the platform attached to the tipping frame generate a load force which tries to push the cylinder, which is arranged to move the tipping frame, inwards. By arranging the bottom side chamber and the rod side chamber of the cylinder in a regenerative connection and by controlling the amount of hydraulic fluid that flows out of the hydraulic arrangement, the cylinder is allowed to move inwards in a controlled way without using a hydraulic pump.

By a double-acting differential cylinder is meant a hydraulic cylinder which can be driven hydraulically both inwards and outwards. A typical double-acting differential cylinder comprises a piston which internally separates bottom side and rod side chambers of the cylinder, and a rod which is attached to the piston. A typical double-acting differential cylinder has two ports at opposite ends, through which ports hydraulic fluid can flow into and out of the bottom side and rod side chambers. Hydraulic fluid is typically oil.

By a flow control valve is meant a valve which controls the flow of fluid. A flow control valve enables a multistage control of the flow, the flow of the fluid can be controlled steplessly or in discrete steps. Thus, the flow control valve is distinct from an on-off valve.

Preferably, the flow control valve is a proportional flow control valve. A proportional flow control valve controls the flow rate of fluid steplessly. The flow rate is proportional to a control signal which can be, for example, an electrical current or external pressure.

That a portion of hydraulic fluid flows out of the hydraulic arrangement means that the fluid flows outside of the bottom side chamber, the rod side chamber and the hydraulic circuit connecting said chambers. From the fluid that flows out of the bottom side chamber, typically 20-30 % is flown out of the hydraulic arrangement, and the rest of the fluid, i.e. 70-80 %, is flown into the rod side chamber.

The hydraulic arrangement is intended to be used in a hooklift. The hydraulic arrangement is used for lowering a tipping frame of the hooklift in a situation where the load force acting on the cylinder pushes the cylinder inwards.

According to an embodiment of the invention the flow control valve is configured to control the flow rate of the hydraulic fluid flowing out of the hydraulic arrangement. The larger the flow rate of the ouflowing fluid is, the larger is the flow rate of the fluid flowing from the bottom side chamber into the rod side chamber of the double-acting differential cylinder.

The flow rate of the outflowing fluid is a crucial factor in lowering a tipping frame of a hooklift. The flow rate of the outflowing fluid is directly proportional to the speed at which the cylinder moves inwards. However, because of the geometry of the hooklift, the angular speed of the tipping frame is not directly proportional to the speed of the cylinder. In fact, the angular speed of the tipping frame is highly dependent on the tipping angle of the tipping frame. When the tipping frame is fully tipped, the load force is very small compared to the cylinder size, whereby it may be difficult to make the cylinder to move. Also a high cylinder speed is required to achieve a high rotational speed of the tipping frame. On the other hand, at a low tipping angle the load force is very large, and even a small change in the position of the cylinder piston causes a large change in the tipping angle. In order to obtain a constant angular speed of the tipping frame, the flow rate of the outflowing fluid must be constantly varied according to the tipping angle.

According to an embodiment of the invention the flow control valve is arranged in the hydraulic circuit. In other words, the flow control valve is arranged to be part of the hydraulic circuit. In this case, the flow control valve outflows a portion of the fluid that flows from the bottom side chamber of the cylinder to the hydraulic circuit.

According to an embodiment of the invention the flow control valve is arranged outside the hydraulic circuit. In this case, an inlet port of the flow control valve may be connected to the bottom side chamber or to the rod side chamber of the cylinder.

According to an embodiment of the invention the hydraulic circuit comprises a regenerative valve configured to control the flow of hydraulic fluid from the bottom side chamber of the cylinder to the hydraulic circuit. The regenerative valve controls the degree of the regenerative connectivity between the bottom side chamber and the rod side chamber of the cylinder by regulating the flow of the fluid. The regenerative valve can be an on-off valve, or a proportional valve which allows the degree of the regenerative connectivity to be adjusted in multiple steps or continuously. The regenerative valve can be, for example, a 2-way pilot controlled cartridge valve according to ISO 7368 standard. This type of valve has a very low pressure loss with a very high flow capacity and a very small opening pressure.

According to an embodiment of the invention the flow control valve and the regenerative valve are integrated together as a single unit. This kind of unit can be, for example, a slide valve which is arranged in the hydraulic circuit, and configured to operate both as a regenerative valve and a flow control valve.

According to an embodiment of the invention an inlet port of the regenerative valve is connected to the bottom side chamber of the cylinder. The regenerative valve may be connected to the bottom side chamber directly, or through one or more hydraulic components.

According to an embodiment of the invention the hydraulic circuit comprises a check valve, an inlet port of the check valve being connected to an outlet port of the regenerative valve, and an outlet port of the check valve being connected to the rod side chamber of the cylinder. The check valve is a valve which allows fluid to flow through it only in one direction. The check valve may be connected to the rod side chamber and/or the outlet port of the regenerative valve directly, or through one or more hydraulic components.

According to an embodiment of the invention an inlet port of the flow control valve is connected between the outlet port of the regenerative valve and the inlet port of the check valve.

According to an embodiment the hydraulic arrangement comprises a control unit configured to control the operation of the flow control valve and/or the regenerative valve. The control unit can be part of the hydraulic circuit.

The control unit is configured to receive information about the state of the hydraulic arrangement and/or the state of the hooklift to which the hydraulic arrangement is connected. Such information can be, for example, a tipping angle of the tipping frame which angle is measured by using one or more tilt sensors attached to the hooklift. Another example of such information is a pressure of the double-acting differential cylinder which pressure is measured by one or more pressure sensors attached in connection with the bottom side chamber and/or the rod side chamber of the cylinder.

According to an embodiment of the invention the flow control valve is an electrically controlled proportional pressure compensated valve. The flow through the pressure compensated valve is proportional to its control current and independent on the pressure difference over the valve. With the pressure compensated valve the speed of the cylinder can be easily controlled. The operation of the pressure compensated valve does not depend on the size of a load. This is an important factor in solutions where an actuator movement is based on an external load force, such as in a hooklift when a tipping frame is being lowered.

According to an embodiment the hydraulic arrangement comprises another double-acting differential cylinder, a bottom side chamber of said cylinder being connected to a rod side chamber of said cylinder through the hydraulic circuit. Two double-acting differential cylinders are typically used in a hooklift for moving the tipping frame.

According to an embodiment of the invention the outflowing hydraulic fluid is arranged to flow into a tank. The fluid from the tank can be circulated back to the bottom side chamber of the cylinder when the cylinder is moved outwards. A tank can be, for example, an external reservoir or a hydraulic accumulator.

The present description also relates to a hooklift which comprises a hydraulic arrangement.

A typical method according to the invention for lowering a tipping frame of a hooklift, the hooklift comprising a double-acting differential cylinder for moving the tipping frame, comprises connecting hydraulically a bottom side chamber of the double-acting differential cylinder to a rod side chamber of said cylinder. The typical method according to the invention further comprises controlling the flow of hydraulic fluid from the bottom side chamber into the rod side chamber by allowing a portion of the hydraulic fluid to flow through a flow control valve into a tank.

According to an embodiment of the invention the portion of the hydraulic fluid flows into the tank without using a hydraulic pump.

According to an embodiment of the invention the method comprises controlling the flow rate of the hydraulic fluid flowing into the tank.

According to an embodiment of the invention the method comprises monitoring a position of the hooklift, and controlling the flow of the hydraulic fluid flowing into the tank according to the position. The information regarding the position of the hooklift can be based, for example, on an angle between the frames of the hooklift or a position of the rod of the cylinder.

The method also comprises monitoring a tipping angle of the hooklift, and controlling the flow of the hydraulic fluid flowing into the tank according to the tipping angle. The measurement of the tipping angle is based on measuring global angles of a subframe and a middle frame of the hooklift with tilt sensors. The tilt sensors are arranged to measure the angles of the frames based on gravity. The tipping angle (the angle between the subframe and the middle frame) is calculated from the global angles of the subrame and the middle frame.

According to an embodiment of the invention if the tipping angle is larger than a first angle threshold value, the lowering of the tipping frame is allowed to begin and to continue until a second angle threshold value is reached.

The first angle threshold value is used for safety reasons. If the lowering of the tipping frame would start at a too low tipping angle, there might be a risk for overloading the cylinder. The cylinder could overload because of the regenerative connection in the hydraulic arrangement. In the regenerative connection, the cylinder can only take about 25 % of its maximum load capability.

If the lowering of the tipping frame has begun, it is allowed to continue even below the first angle threshold value. Below the first angle threshold value, the cylinder speed is preferably arranged to decrease smoothly. The lowering with the method according to the invention is continued until the second angle threshold value is reached.

It should be noted that also other lowering methods could be used in the same hooklift. Thus, during the lowering of the tipping frame it is possible to change from one method to another. For example, below the second angle threshold value, the lowering of the tipping frame could be continued with another lowering method.

According to an embodiment of the invention the method comprises monitoring a loading of the double-acting differential cylinder, and controlling the flow of the hydraulic fluid flowing into the tank according to the loading. The loading of the double-acting differential cylinder can be determined, for example, by measuring the force or the pressure acting on the cylinder.

According to an embodiment of the invention the method comprises monitoring a pressure of the double-acting differential cylinder, and controlling the flow of the hydraulic fluid flowing into the tank according to the pressure. Preferably, the pressure of the bottom side chamber is monitored. The pressure is measured with a suitable pressure sensor, such as an electrical pressure sensor which comprises a strain gauge.

Preferably, the pressure monitoring is activated with a certain delay after the lowering has started. If the pressure remains under certain threshold value the lowering is allowed to continue.

According to an embodiment of the invention if the pressure is larger than a pressure threshold value, the lowering of the tipping frame is stopped. In other words, the flow control valve is closed when the pressure reaches the pressure threshold value.

According to an embodiment of the invention the loading of the cylinder is decreased by reducing with a regenerative valve the flow of hydraulic fluid from the bottom side chamber to the rod side chamber.

In a hydraulic arrangement PLC control software may be used together with the tipping angle and the cylinder pressure measurement to achieve safe behaviour, good usability and performance.

An advantage of the present invention is that the tipping frame of the hooklift can be lowered at a constant angular speed. This is due to the flow control valve which allows controlling the speed of the cylinder.

Another advantage is that the tipping frame of the hooklift can be lowered faster than with the systems according to the prior art.

Still another advantage is that because a hydraulic pump is not needed in lowering the tipping frame, the present invention requires very little energy.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

### BRIEF DESCRIPTION OF THE DRAWINGS

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.
- Fig. 1: illustrates schematically a conventional hooklift assembled on a truck,
- figs. 2a-2d: illustrate block diagrams of hydraulic arrangements according to embodiments, and
- fig. 3: illustrates a detailed block diagram of a hydraulic arrangement according to an embodiment.

### DETAILED DESCRIPTION OF THE PREFERRED EMBODIMENTS OF THE INVENTION

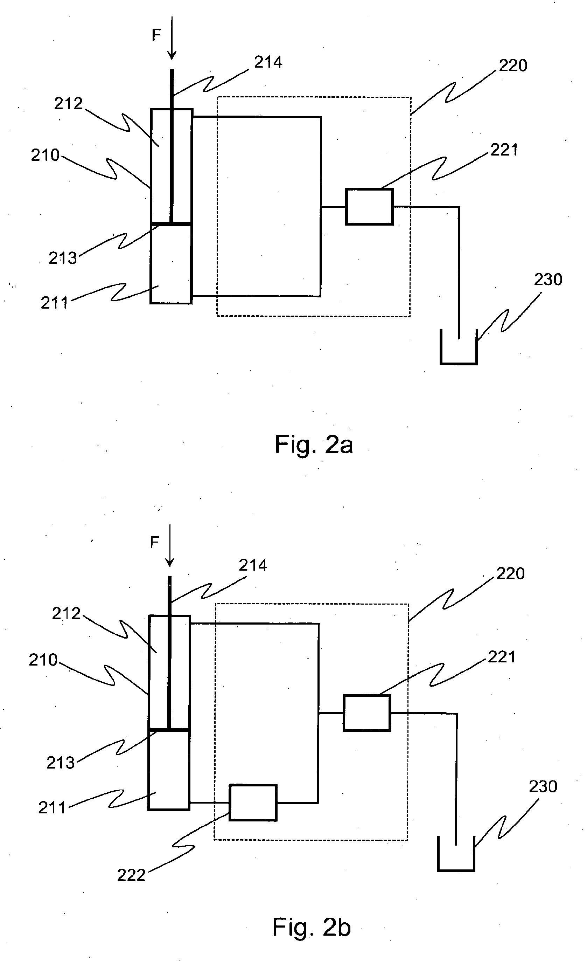

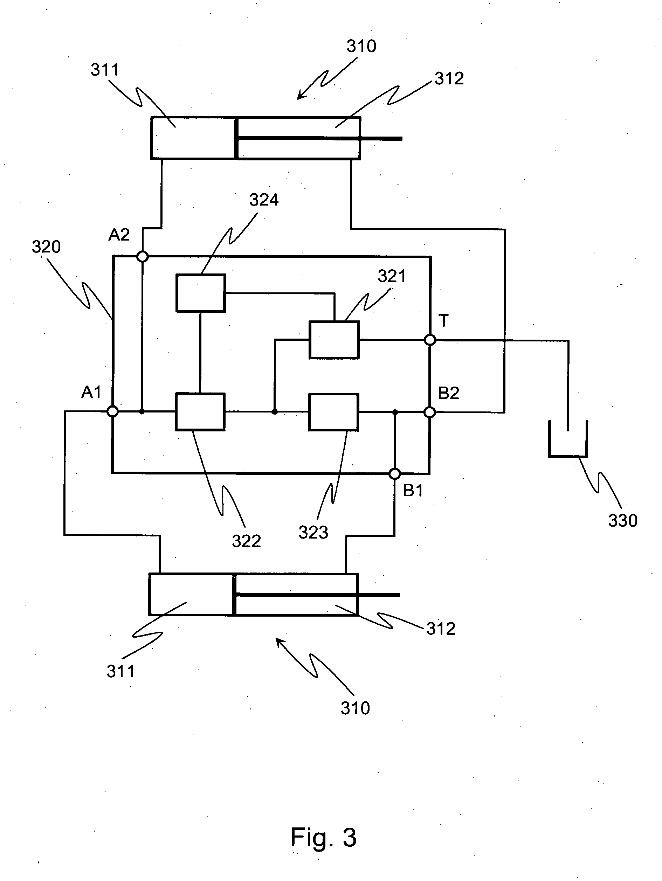

Fig. 1 has already been described in detail in the description of prior art. Therefore, the following discussion will focus on figs. 2a-2d and 3.

Figs. 2a-2d illustrate block diagrams of hydraulic arrangements according to embodiments. In fig. 2a, there is shown a hydraulic arrangement which comprises a double-acting differential cylinder 210 and a hydraulic circuit 220 connected between a bottom side chamber 211 and a rod side chamber 212 of the cylinder 210. The cylinder 210 comprises a piston 213 which internally separates the two chambers 211, 212 of the cylinder 210, and a rod 214 which attaches to the piston 213 and extends from the cylinder 210 through the rod end head. The chambers 211, 212 of the cylinder 210 contain hydraulic fluid.

The hydraulic circuit 220 connects the bottom side chamber 211 to the rod side chamber 212 in a regenerative manner, whereby hydraulic fluid may flow from the bottom side chamber 211 into the rod side chamber 212 when the cylinder 210 moves inwards. The hydraulic circuit 220 comprises a flow control valve 221 which controls the amount of hydraulic fluid that is flown out of the hydraulic arrangement into a tank 230. An inlet port of the flow control valve 221 is connected to the bottom side chamber 211 of the cylinder 210.

If in a situation where a load force acts on the cylinder, hydraulic fluid is allowed to flow through the flow control valve 221 into the tank 230, then the cylinder 210 moves inwards. Because hydraulic fluid is allowed to flow out of the hydraulic arrangement, hydraulic fluid may flow from the bottom side chamber 211 into the rod side chamber 212 through the hydraulic circuit 220.

The hydraulic arrangement shown in fig. 2b is similar to the arrangement of fig. 2a, except that the arrangement of fig. 2b further comprises a regenerative valve 222 in the hydraulic circuit 220. The regenerative valve 222 regulates the flow of hydraulic fluid from the bottom side chamber 211 of the cylinder 210 to the hydraulic circuit 220. Thus, the regenerative valve 222 controls the degree of the regenerative connectivity between the bottom side chamber 211 and the rod side chamber 212 of the cylinder 210.

An inlet port of the regenerative valve 222 is connected to the bottom side chamber 211 of the cylinder 210. An outlet port of the regenerative valve 222 is connected to the rod side chamber 212 and to the inlet port of the flow control valve 221.

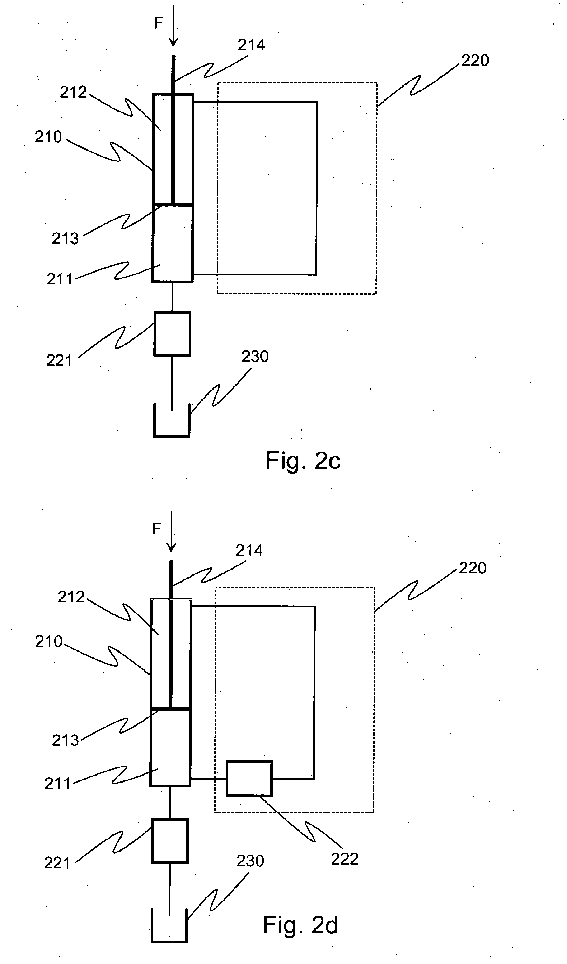

In fig. 2c, there is shown a hydraulic arrangement which is similar to the arrangement of fig. 2a, except that the flow control valve 221 is arranged outside the hydraulic circuit 220. An inlet port of the flow control valve 221 is connected directly to the bottom side chamber 211 of the double-acting differential cylinder 210.

The hydraulic arrangement shown in fig. 2d is similar to the arrangement of fig. 2c, except that the arrangement of fig. 2d further comprises a regenerative valve 222 in the hydraulic circuit 220. An inlet port of the regenerative valve 222 is connected to the bottom side chamber 211 of the cylinder 210, and an outlet port of the regenerative valve 222 is connected to the rod side chamber 212 of the cylinder 210.

Fig. 3 illustrates a detailed block diagram of a hydraulic arrangement according to an embodiment. The hydraulic arrangement comprises two double-acting differential cylinders 310 and a hydraulic circuit 320 connected between bottom side chambers 311 and rod side chambers 312 of the cylinders 310.

The hydraulic circuit 320 comprises a regenerative valve 322 for controlling the flow of hydraulic fluid from the bottom side chambers 311 of the cylinders 310 to the hydraulic circuit 320, a flow control valve 321 for allowing a portion of the hydraulic fluid to flow out of the hydraulic arrangement, and a check valve 323 for allowing the fluid to flow only in one direction through the hydraulic circuit 320. The hydraulic circuit 320 further comprises a control unit 324 for controlling the operation of the flow control valve 321 and the regenerative valve 322.

An inlet port of the regenerative valve 322 is connected through ports A1 and A2 to the bottom side chambers 311 of the cylinders 310. An inlet port of the check valve 323 is connected to an outlet port of the regenerative valve 322, and an outlet port of the check valve 323 is connected through ports B1 and B2 to the rod side chambers 312 of the cylinders 310. An inlet port of the flow control valve 321 is connected between the outlet port of the regenerative valve 322 and the inlet port of the check valve 323. An outlet port of the flow control valve 321 is connected through port T to a tank 330.

When the hydraulic arrangement of fig. 3 is arranged in a hooklift, the lowering of a tipping frame can be started by activating a pilot control cartridge of the control unit 324 which opens the regenerative valve 322. At the same time the flow control valve 321 is controlled open and the cylinders 310 start to move inwards. The hydraulic fluid from the bottom side chambers 311 flows to the ports A1 and A2 and then through the regenerative valve 322. A portion of the fluid flows through the flow control valve 321 to the port T and then to the tank 330. Most of the fluid flows through the check valve 323 to the ports B1 and B2 and then to the rod side chambers 312 of the cylinders 310.

In fig. 3, the flow control valve 321 is preferably an electrically controlled proportional pressure compensated valve. The flow through the pressure compensated valve is proportional to its control current and independent on the pressure difference over the valve. The regenerative valve 322 can be a 2-way pilot controlled cartridge valve.

Only advantageous exemplary embodiments are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A method for lowering a tipping frame of a hooklift, the hooklift comprising a double-acting differential cylinder (210, 310) for moving the tipping frame, the method comprising:
- connecting hydraulically a bottom side chamber (211, 311) of the double-acting differential cylinder (210, 310) to a rod side chamber (212, 312) of said cylinder and
- controlling the flow of hydraulic fluid from the bottom side chamber (211, 311) into the rod side chamber (212, 312) by allowing a portion of the hydraulic fluid to flow through a flow control valve (221, 321) into a tank (230, 330),
**characterised in that** the method comprises monitoring a tipping angle of the hooklift and controlling the flow of the hydraulic fluid flowing into the tank (230, 330) according to the tipping angle.

2. The method according to claim 1, **characterised in that** the portion of the hydraulic fluid flows into the tank (230, 330) without using a hydraulic pump.

3. The method according to any of the preceding claims, **characterised in that** the method comprises controlling the flow rate of the hydraulic fluid flowing into the tank.

4. The method according to any of the preceding claims, **characterised in that** the method comprises:
- monitoring a position of the hooklift, and
- controlling the flow of the hydraulic fluid flowing into the tank (230, 330) according to the position.

5. The method according to any of the preceding claims, **characterised in that** the method comprises:
- monitoring a loading of the double-acting differential cylinder (210, 310), and
- controlling the flow of the hydraulic fluid flowing into the tank (230, 330) according to the loading.

6. The method according to any of the preceding claims, **characterised in that** the flow control valve (221, 321) is configured to control the flow rate of the hydraulic fluid flowing out of the hydraulic arrangement.

7. The method according to any of the preceding claims, **characterised in that** the flow control valve (221, 321) is arranged in the hydraulic circuit (220, 320).

8. The method according to any of the claims 1-6, **characterised in that** the flow control valve (221, 321) is arranged outside the hydraulic circuit (220, 320).

9. The method according to any of the preceding claims, **characterised in that** the hydraulic circuit comprises a regenerative valve (222, 322) configured to control the flow of hydraulic fluid from the bottom side chamber (211, 311) of the cylinder (210, 310) to the hydraulic circuit (220, 320).

10. The method according to claim 9, **characterised in that** an inlet port of the regenerative valve (222, 322) is connected to the bottom side chamber (211, 311) of the cylinder (210, 310).

11. The method according to claim 9 or 10, **characterised in that** the hydraulic circuit comprises a check valve (323), an inlet port of the check valve (323) being connected to an outlet port of the regenerative valve (322), and an outlet port of the check valve (323) being connected to the rod side chamber (312) of the cylinder (210, 310).

12. The method according to any of the preceding claims, **characterised in that** the hydraulic arrangement comprises a control unit configured to control the operation of the flow control valve (221, 321) and/or the regenerative valve (222, 322).

13. The method according to any of the preceding claims, **characterised in that** the flow control valve (221, 321) is an electrically controlled proportional pressure compensated valve.

14. The method according to any of the preceding claims, **characterised in that** the hydraulic arrangement comprises another double-acting differential cylinder (210, 310), a bottom side chamber (211, 311) of said cylinder being connected to a rod side chamber (212, 3112) of said cylinder through the hydraulic circuit (220, 320).

15. The method according to any of the preceding claims, **characterised in that** the outflowing hydraulic fluid is arranged to flow into a tank (230, 330).

## Patentansprüche

1. Verfahren zum Herablassen eines Kipprahmens eines Hakenlifts, wobei der Hakenlift einen zweifach wirkenden Differenzialzylinder (210, 310) zum Bewegen des Kipprahmens umfasst, wobei das Verfahren umfasst:
- hydraulisches Verbinden einer unterseitigen Kammer (211, 311) des zweifach wirkenden Differenzialzylinders (210, 310) mit einer stangenseitigen Kammer (212, 312) des Zylinders, und
- Steuern des Flusses von Hydraulikflüssigkeit von der unterseitigen Kammer (211, 311) in die stangenseitige Kammer (212, 312) dadurch, dass es einem Anteil der Hydraulikflüssigkeit ermöglicht wird, durch ein Flusssteuerungsventil (221, 321) in einen Tank (230, 330) zu fließen,
**dadurch gekennzeichnet, dass** das Verfahren ein Überwachen eines Kippwinkels des Hakenlifts und ein Steuern des Flusses der in den Tank (230, 330) fließenden Hydraulikflüssigkeit gemäß dem Kippwinkel umfasst.

2. Verfahren gemäß Anspruch 1, **dadurch gekennzeichnet, dass** der Anteil der Hydraulikflüssigkeit ohne Einsatz einer Hydraulikpumpe in den Tank (230, 330) fließt.

3. Verfahren gemäß einem der vorhergehenden Ansprüche, **dadurch gekennzeichnet, dass** das Verfahren ein Steuern der Flussrate der in den Tank fließenden Hydraulikflüssigkeit umfasst.

4. Verfahren gemäß einem der vorhergehenden Ansprüche, **dadurch gekennzeichnet, dass** das Verfahren umfasst:
- Überwachen einer Position des Hakenlifts und
- Steuern des Flusses der in den Tank (230, 330) fließenden Hydraulikflüssigkeit gemäß der Position.

5. Verfahren gemäß einem der vorhergehenden Ansprüche, **dadurch gekennzeichnet, dass** das Verfahren umfasst:
- Überwachen einer Belastung des zweifach wirkenden Differenzialzylinders (210, 310), und
- Steuern des Flusses der in den Tank (230, 320) fließenden Hydraulikflüssigkeit gemäß der Belastung.

6. Verfahren gemäß einem der vorhergehenden Ansprüche, **dadurch gekennzeichnet, dass** das Flusssteuerungsventil (221, 321) dazu eingerichtet ist, die Flussrate der aus der hydraulischen Anordnung abfließenden Hydraulikflüssigkeit zu steuern.

7. Verfahren gemäß einem der vorhergehenden Ansprüche, **dadurch gekennzeichnet, dass** das Flusssteuerungsventil (221, 321) in dem Hydraulikkreislauf (220, 320) angeordnet ist.

8. Verfahren gemäß einem der Ansprüche 1 - 6, **dadurch gekennzeichnet, dass** das Flusssteuerungsventil (221, 321) außerhalb des Hydraulikkreislaufs (220, 320) angeordnet ist.

9. Verfahren gemäß einem der vorhergehenden Ansprüche, **dadurch gekennzeichnet, dass** der Hydraulikkreislauf ein Regenerationsventil (222, 322) umfasst, welches dazu eingerichtet ist, den Fluss von Hydraulikflüssigkeit von der unterseitigen Kammer (211, 311) des Zylinders (210, 310) zu dem Hydraulikkreislauf (220, 320) zu steuern.

10. Verfahren gemäß Anspruch 9, **dadurch gekennzeichnet, dass** eine Einlassöffnung des Regenerationsventils (222, 322) mit der unterseitigen Kammer (211, 311) des Zylinders (210, 310) verbunden ist.

11. Verfahren gemäß Anspruch 9 oder 10, **dadurch gekennzeichnet, dass** der Hydraulikkreislauf ein Rückschlagventil (323) umfasst, wobei eine Einlassöffnung des Rückschlagventils (323) mit einer Auslassöffnung des Regenerationsventils (322) verbunden ist, und eine Auslassöffnung des Rückschlagventils (323) mit der stangenseitigen Kammer (312) des Zylinders (210, 310) verbunden ist.

12. Verfahren gemäß einem der vorhergehenden Ansprüche, **dadurch gekennzeichnet, dass** die hydraulische Anordnung eine Steuereinheit umfasst, welche dazu eingerichtet ist, den Betrieb des Flusssteuerungsventils (221, 321) und/oder des Regenerationsventils (222, 322) zu steuern.

13. Verfahren gemäß einem der vorhergehenden Ansprüche, **dadurch gekennzeichnet, dass** das Flusssteuerungsventil (221, 321) ein elektrisch gesteuertes proportionaldruckkompensiertes Ventil ist.

14. Verfahren gemäß einem der vorhergehenden Ansprüche, **dadurch gekennzeichnet, dass** die hydraulische Anordnung einen weiteren zweifach wirkenden Differenzialzylinder (210, 310) umfasst, wobei eine unterseitige Kammer (211, 311) des Zylinders durch den Hydraulikkreislauf (220, 320) mit einer stangenseitigen Kammer (212, 3112) des Zylinders verbunden ist.

15. Verfahren gemäß einem der vorhergehenden Ansprüche, **dadurch gekennzeichnet, dass** die ausfließende Hydraulikflüssigkeit dazu eingerichtet ist, in einen Tank (230, 330) zu fließen.

## Revendications

1. Procédé d'abaissement d'un châssis basculant d'un élévateur à crochet, l'élévateur à crochet comprenant un vérin différentiel à double effet (210, 310) permettant de déplacer le châssis basculant, le procédé comprenant le fait de :
- connecter hydrauliquement une chambre située du côté du fond (211, 311) du cylindre différentiel à double effet (210, 310) à une chambre située du côté d'une tige (212, 312) dudit vérin et
- contrôler la circulation de fluide hydraulique provenant de la chambre située du côté du fond (211, 311) vers la chambre située du côté de la tige (212, 312) en permettant à une partie du fluide hydraulique de s'écouler à travers une vanne de contrôle d'écoulement (221, 321) dans un réservoir (230, 330),
**caractérisé en ce que** le procédé comprend de surveiller un angle de basculement de l'élévateur à crochet et de contrôler la circulation du fluide hydraulique s'écoulant dans le réservoir (230, 330) en fonction de l'angle de basculement.

2. Procédé selon la revendication 1, **caractérisé en ce que** la partie du fluide hydraulique s'écoule dans le réservoir (230, 330) sans utiliser une pompe hydraulique.

3. Procédé selon l'une quelconque des revendications précédentes, **caractérisé en ce que** le procédé comprend de contrôler le débit du fluide hydraulique s'écoulant dans le réservoir.

4. Procédé selon l'une quelconque des revendications précédentes, **caractérisé en ce que** le procédé comprend le fait de :
- surveiller une position de l'élévateur à crochet, et
- contrôler la circulation du fluide hydraulique s'écoulant dans le réservoir (230, 330) selon ladite position.

5. Procédé selon l'une quelconque des revendications précédentes, **caractérisé en ce que** le procédé comprend le fait de :
- surveiller une charge du vérin différentiel à double effet (210, 310), et
- contrôler la circulation du fluide hydraulique s'écoulant dans le réservoir (230, 330) selon ladite charge.

6. Procédé selon l'une quelconque des revendications précédentes, **caractérisé en ce que** la vanne de contrôle d'écoulement (221, 321) est configurée pour contrôler le débit du fluide hydraulique s'écoulant hors du dispositif hydraulique.

7. Procédé selon l'une quelconque des revendications précédentes, **caractérisé en ce que** la vanne de contrôle d'écoulement (221, 321) est disposée dans le circuit hydraulique (220, 320).

8. Procédé selon l'une quelconque des revendications 1 à 6, **caractérisé en ce que** la vanne de contrôle d'écoulement (221, 321) est disposée à l'extérieur du circuit hydraulique (220, 320).

9. Procédé selon l'une quelconque des revendications précédentes, **caractérisé en ce que** le circuit hydraulique comprend une vanne de régénération (222, 322) configurée pour commander l'écoulement du fluide hydraulique depuis la chambre située du côté du fond (211, 311) du vérin jusqu'au circuit hydraulique (220, 320).

10. Procédé selon la revendication 9, **caractérisé en ce qu'**un orifice d'admission de la vanne de régénération (222, 322) est raccordé à la chambre située du côté du fond (211, 311) du vérin (210, 310).

11. Procédé selon la revendication 9 ou 10, **caractérisé en ce que** le circuit hydraulique comprend un clapet anti-retour (323), un orifice d'entrée du clapet anti-retour (323) étant raccordé à un orifice de sortie de la vanne de régénération (322) et un orifice de sortie du clapet anti-retour (323) étant raccordé à la chambre située du côté de la tige (312) du vérin (210, 310).

12. Procédé selon l'une quelconque des revendications précédentes, **caractérisé en ce que** le dispositif hydraulique comprend une unité de commande configurée pour contrôler le fonctionnement de la vanne de contrôle d'écoulement (221, 321) et/ou de la vanne de régénération (222, 322).

13. Procédé selon l'une quelconque des revendications précédentes, **caractérisé en ce que** la vanne de contrôle d'écoulement (221, 321) est une vanne de régulation de débit compensée par pression proportionnelle et commandée électriquement.

14. Procédé selon l'une quelconque des revendications précédentes, **caractérisé en ce que** le dispositif hydraulique comprend un autre vérin différentiel à double effet (210, 310), une chambre située du côté d'un fond (211, 311) dudit vérin étant raccordée à une chambre située du côté d'une tige (212, 312) dudit vérin par l'intermédiaire du circuit hydraulique (220, 320).

15. Procédé selon l'une quelconque des revendications précédentes, **caractérisé en ce que** le fluide hydraulique sortant est agencé pour s'écouler dans le réservoir (230, 330).
